# EUROPEAN PATENT APPLICATION

(11) **EP 4 618 209 A1**
(43) Date of publication of application: **17.09.2025**
(21) Application number: 24885950.6
(22) Date of filing: 01.07.2024
(51) Int. Cl.: H01M 10/04, H01M 50/609, H01M 10/058, H01M 10/44

(54) **BATTERY CELL MANUFACTURING METHOD**

(30) Priority: 30.10.2023 KR 20230146682
(71) Applicant: LG Energy Solution, Ltd., Seoul 07335 (KR)
(72) Inventor: HWANG, Gyu Ok, Daejeon 34122 (KR)
(74) Representative: Plasseraud IP
(86) International application number: PCT/KR2024/009169
(87) International publication number: WO 2025/095268

(57) **Abstract**

A battery cell manufacturing method according to one embodiment of the present disclosure includes a battery cell assembly step of mounting an electrode assembly including a cathode, an anode, and a separator interposed between the cathode and the anode into a receiving part of a battery case; a needle part insertion step of inserting a needle part into the inside of the electrode assembly; and an electrolyte injection and sealing step of injecting an electrolyte solution into the inside of the battery case in a state where the needle part is inserted into the electrode assembly, and then sealing the battery case.

## Description

### [TECHNICAL FIELD]

### Cross Citation with Related Application(s)

This application claims the benefit of Korean Patent Application No. 10-2023-0146682 filed on October 30, 2023 in the Korean Intellectual Property Office, the disclosure of which is incorporated herein by reference in its entirety.

The present disclosure relates to a battery cell manufacturing method, and more specifically, to a battery cell manufacturing method that improves the wettability of an electrolyte solution for the electrode while facilitating the discharge of air and/or gas generated inside the battery cell in a process.

### [BACKGROUND]

With technology development of mobile devices, and an increase in demand therefor, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, a secondary battery may be classified into a cylindrical battery in which an electrode assembly is mounted in a cylindrical metal container, a prismatic battery in which an electrode assembly is mounted in a prismatic metal container, or a pouch type battery in which an electrode assembly is mounted in a pouch-shaped case made of an aluminum laminate sheet. Here, the electrode assembly mounted in the battery case serves as a power generating element capable of charging/discharging and including a stacked structure of a cathode, an anode and a separator interposed between the cathode and the anode. The electrode assembly may be classified into jelly-roll types formed by interposing a separator between a long sheet type cathode and a long sheet type anode and winding them, and stacked types formed by sequentially stacking a plurality of cathodes and anodes with separators being interposed between the cathode and the anode.

Among these, particularly, usage of a pouch-shaped battery configured to have a structure in which such a stacked type or stacked/folded type electrode assembly is mounted in a pouch-shaped battery case made of an aluminum laminate sheet has gradually increased due to advantages of low manufacturing costs, light weight, easy modification in shape, etc.

However, when manufacturing a pouch-type battery, an electrolyte solution may be injected into a pouch-type battery case in a state where the electrode assembly is mounted therein. In particular, during the process of manufacturing a pouch-type battery, air, gas, or the like trapped between the electrode and the separator of the electrode assembly or between the electrodes may not be discharged. Such air, gas, or the like may interfere with the charging and discharging of a battery, which causes problems such as the occurrence of lithium plating and a decrease in battery capacity.

Therefore, there is a need to develop a battery cell manufacturing method that improves the wettability of an electrolyte solution for the electrode while facilitating the discharge of air and/or gas generated inside the battery cell in a manufacturing process.

### [DETAILED DESCRIPTION OF THE INVENTION]

### [Technical Problem]

It is an object of the present disclosure to provide a battery cell manufacturing method that improves the wettability of an electrolyte solution for the electrode while facilitating the discharge of air and/or gas generated inside the battery cell in a manufacturing process.

The technical objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery cell manufacturing method, comprising: a battery cell assembly step of mounting an electrode assembly including a cathode, an anode, and a separator interposed between the cathode and the anode into a receiving part of a battery case; a needle part insertion step of inserting a needle part into the inside of the electrode assembly; and an electrolyte injection and sealing step of injecting an electrolyte solution into the inside of the battery case in a state where the needle part is inserted into the electrode assembly, and then sealing the battery case.

**In** the needle part insertion step, the needle part may be inserted between the separator and the cathode which are located adjacent to each other, or may be inserted between the separator and the anode which are located adjacent to each other.

In the needle part insertion step, the needle part may be inserted between the separator and the cathode which are located adjacent to each other, and may be inserted between the separator and the anode which are located adjacent to each other.

The needle part may be inserted into a central part of the electrode assembly.

The needle part may include at least one needle that extends along the width direction of the electrode assembly.

The needle part may have a thickness of 0.2 mm or more and 1 mm or less.

The at least one needle may be arranged in a diagonal direction based on a thickness direction of the electrode assembly.

The needle part further includes a connection part that extends along the thickness direction of the electrode assembly, and one end of the at least one needle may be fixed to the connection part.

The connection part may be located between the electrode assembly and the sealing part.

After the electrolyte injection and sealing step, the method may further comprise an activation step of activating the battery cell, and a degassing and needle part removal step of removing gas generated inside the battery cell to remove the needle part.

In the degassing and needle part removal step, the sealing part of the battery case and the electrode assembly are cut so that an opening part may be formed on one side surface of the battery case.

In the degassing and needle part removal step, a needle removal part may be inserted into the opening part to remove the needle part from the electrode assembly.

After the degassing and needle part removal step, the method may further comprise a pressurized rolling step of pressing and rolling the outer surface of the battery cell, and a resealing step of resealing the portion cut between the sealing part of the battery case and the electrode assembly.

The activation step may comprise a pre-aging step of storing the battery cell at room temperature, a formation step of charging and discharging the battery cell at least once, and an aging step of storing the battery cell at high temperature.

### [Advantageous Effects]

According to embodiments, a battery cell manufacturing method pf the present disclosure may improve the wettability of an electrolyte solution for the electrode while facilitating the discharge of air and/or gas generated inside the battery cell in a process.

Effects of the present disclosure are not limited to the effects mentioned above, and additional other effects not mentioned herein will be clearly understood by a person of ordinary skill in the art from the detailed description and the accompanying drawing.

### [BRIEF DESCRIPTION OF THE DRAWINGS]

FIG. 1 is a flow chart showing a battery cell manufacturing method according to one embodiment of the present disclosure;
FIG. 2 is a perspective view showing a battery cell after the electrolyte injection and sealing steps of FIG. 1;
FIG. 3 shows an enlarged view of a portion of a cross-section cut along the a-a' axis of FIG. 2;
FIG. 4 is a drawing showing a cross-section cut along the b-b' axis of FIG. 2;
FIG. 5 is a perspective view showing a battery cell in the degassing and needle part removal steps of FIG. 1; and
FIG. 6 is a perspective view showing a needle removal part and a needle part inserted into an opening part of the battery cell of FIG. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are not related to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the description, when a portion is referred to as "including" or "comprising" a certain component, it means that the portion can further include other components, without excluding the other components, unless explicitly described to the contrary.

Further, throughout the description, when referred to as "planar", it means when a target portion is viewed from the upper side, and when it is referred to as "cross-sectional", it means when a target portion is viewed from the side of a cross section cut vertically.

Now, a battery cell manufacturing method according to one embodiment of the present disclosure will be described.

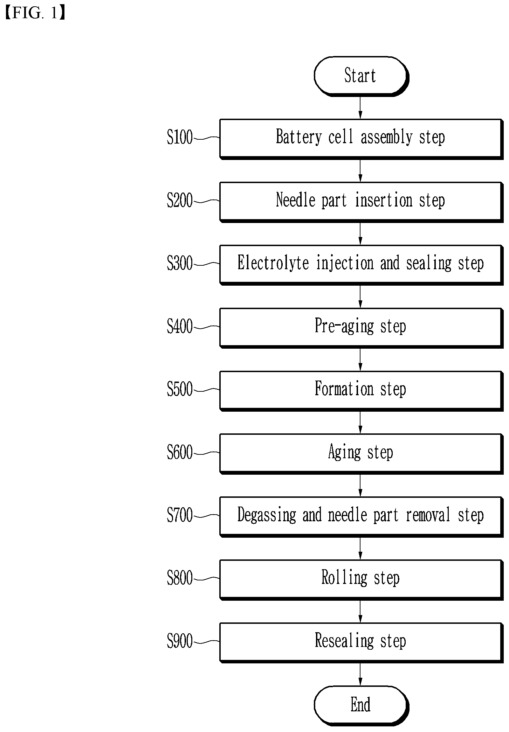

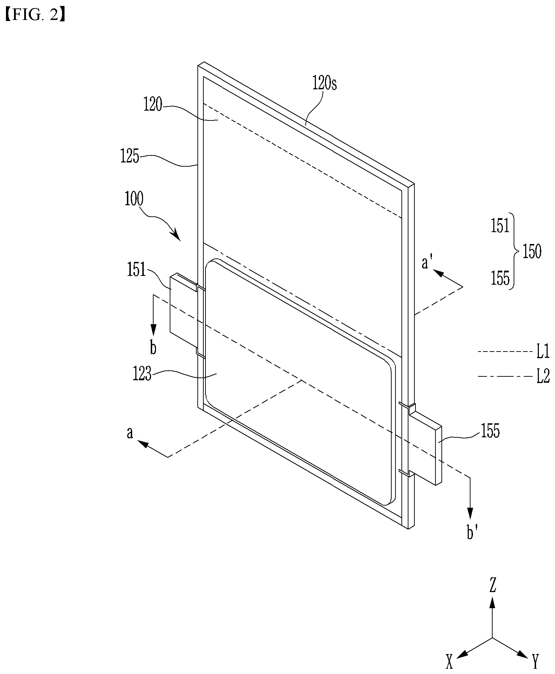

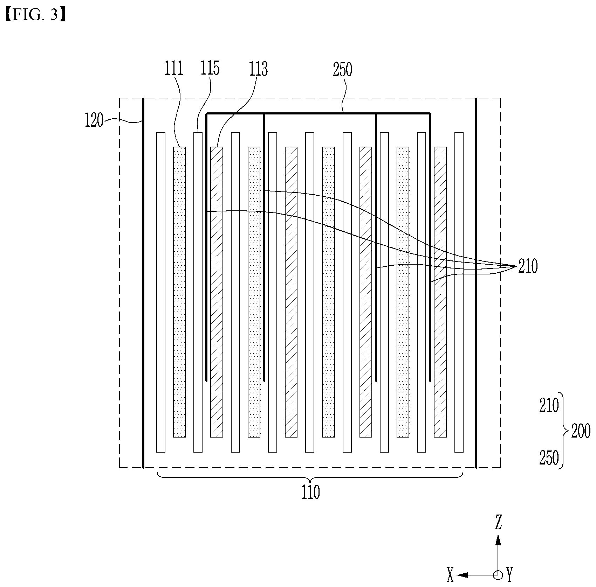

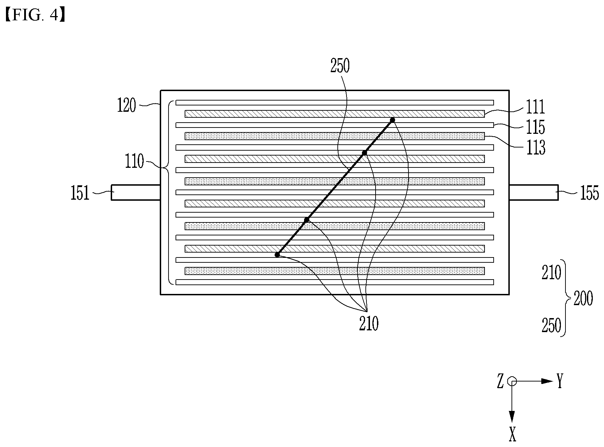

FIG. 1 is a flow chart showing a battery cell manufacturing method according to one embodiment of the present disclosure. FIG. 2 is a perspective view showing a battery cell after the electrolyte injection and sealing steps of FIG. 1. FIG. 3 shows an enlarged view of a portion of a cross-section cut along the a-a' axis of FIG. 2. FIG. 4 is a drawing showing a cross-section cut along the b-b' axis of FIG. 2.

A battery cell manufacturing method according to one embodiment of the present disclosure comprises a battery cell assembly step S100 of mounting an electrode assembly 110 including a cathode 111, an anode 113, and a separator 115 interposed between the cathode 111 and the anode 113 into a receiving part 123 of a battery case 120; a needle part insertion step S200 of inserting a needle part 200 into the inside of the electrode assembly 100; and an electrolyte injection and sealing step S300 of injecting an electrolyte solution into the inside of the battery case 120 in a state where the needle part 200 is inserted into the electrode assembly 110, and then forming a sealing part 120s in a battery case 120.

Referring to FIG. 2, the battery cell 100 assembled in the battery cell assembly step S100 is a pouch battery cell, and includes an electrode assembly 110 inside a battery case 120. In addition, the battery cell 100 is configured such that electrode leads 150 connected to electrode tabs (not shown) of the electrode assembly 110 are exposed to the outside, and lead films (not shown) are attached to the upper and lower parts of the electrode leads 150.

The electrode assembly 110 includes a cathode 111, an anode 113, and a separator 115. More specifically, the electrode assembly 110 may have a structure in which the cathode 111 and the anode 113 are sequentially stacked with the separator 115 interposed therebetween and are formed in the state of being insulated from each other. Here, the electrode assembly 110 may be a stacked-type electrode assembly or a stacked/folded-type electrode assembly. However, the shape of the electrode assembly 110 is not limited thereto, and may be included in the present embodiment as long as it is an assembly shape including a cathode 111, an anode 113, and a separator 115. In addition, the cathode 111, the anode 113, and the separator 115 may be made of materials commonly included in a battery cell.

The electrode lead 150 may include a cathode lead 151 connected to cathode tabs (not shown) of the electrode assembly 110; and an anode lead 155 connected to anode tabs (not shown) of the electrode assembly 110. Further, a first lead film 161 may be attached to the upper and lower parts of the cathode lead 151, and a second lead film 165 may be attached to the upper and lower parts of the anode lead 155. However, as shown in FIG. 2, the position of the electrode lead 150 is not limited to being located at both ends of the electrode assembly 110, and the cathode lead 151 and the anode lead 155 may be located together at one end of the electrode assembly 110.

The battery cell 100 assembled in the battery cell assembly step S100 may be configured such that in a state where the electrode assembly 110 is mounted in a recessed receiving part 123 formed in the battery case 120, the outer peripheral surface of the battery case 120 may be thermally fused to form a sealed outer peripheral part 125.

As shown in FIG. 2, one side surface of the battery case 120 may have a structure that extends outward from the receiving part 123, and one side surface of the battery case 120 may extend to a width that is relatively wider than the other side surface of the battery case 120. In addition, the battery cell 100 assembled in the battery cell assembly step S100 may have the electrode assembly 110 mounted into the receiving part 123 in a state where at least one side surface of the battery case 120 is unsealed. Here, at least one side surface of the battery case 120 may be a side surface on which the electrode lead 150 is not located among the electrode assembly 110.

Referring to FIGS. 1 and 3, in the needle part insertion step S200, the needle part 200 may be inserted between components located adjacent to each other among a cathode 111, an anode 113, and a separator 115 included in the electrode assembly 100. More specifically, the needle part 200 may be inserted between the separator 115 and the cathode 111 which are located adjacent to each other, or may be inserted between the separator 115 and the anode 113 which are located adjacent to each other. In addition, the needle part 200 may be inserted between the separator 115 and the cathode 111 which are located adjacent to each other, and may be inserted between the separator 115 and the anode 113 which are located adjacent to each other.

As one example, as shown in FIG. 3, the needle part 200 may be located between the cathode 111 and/or the anode 113 located adjacent to different separators 115 from each other, and the separator 115, respectively. As another example, although not shown in the figure, the needle part 200 may be located between the cathode 111 and the anode 113 located adjacent to the same separator 115, and the separator 115, respectively.

Thereby, in the battery cell manufacturing method according to the present embodiment, the needle part insertion step S200 may insert the needle part 200 into the inside of the electrode assembly 100 to discharge air or gas trapped between the cathode 111 and/or the anode 113 and the separator 115 to the outside of the electrode assembly 100, and prevent lithium plating and capacity reduction that may occur due to such air or gas.

In addition, the needle part 200 can form a fine step between the cathode 111 and/or the anode 113 and the separator 115, and this step may cause a capillary force. That is, when the electrolyte solution is injected in a state where the needle part 200 is inserted into the electrode assembly 100, it is possible to further improve the wettability of the electrolyte solution for the cathode 111 and/or the anode 113.

The needle part 200 may be inserted into a central part of the electrode assembly 110. In other words, the needle part 200 may be located between the separator 115 located in the central part of the electrode assembly 110 and the cathode 111 and/or anode located adjacent to the separator 115. Here, the central part of the electrode assembly 110 may mean a center part with respect to the thickness direction of the electrode assembly 110.

Thereby, in the battery cell manufacturing method according to the present embodiment, the needle part insertion step S200 inserts the needle part 200 into the central part of the electrode assembly 100, which can further improve the wettability of the cathode 111 and/or anode 113 located at the central part of the electrode assembly 110, and thus can make the wettability of the electrolyte solution according to the position of the electrode assembly 110 relatively uniform.

More specifically, as shown in FIG. 3, the needle part 200 may include at least one needle 210 that extends along the width direction of the electrode assembly 110.

As shown in FIG. 3, the needle 210 may extend along the width direction of the electrode assembly 110 to a portion passing through the center of the electrode assembly 110. As another example, unlike FIG. 3, the needle 210 may extend along the width direction of the electrode assembly 110 to the center of the electrode assembly 110, or may extend to the end of the electrode assembly 110. Here, the length of the needle 210 may be adjusted to a level where it does not interfere with wetting of an electrolyte solution for the cathode 111 and/or the anode 113 of the electrode assembly 110.

Thereby, in the battery cell manufacturing method according to the present embodiment, the needle part insertion step S200 adjusts the length of at least one needle 210, and thus can further improve the wettability of the electrolyte solution for the cathode 111 and/or the anode 113 without interfering with wetting of an electrolyte solution for the cathode 111 and/or the anode 113 of the electrode assembly 110.

As one example, the thickness of the needle 210 may be 0.2 mm or more and 1 mm or less. However, the thickness of the needle 210 is not limited thereto, and the thickness of the needle 210 may be adjusted to a degree that does not interfere with wetting of an electrolyte solution for the cathode 111 and/or the anode 113 of the electrode assembly 110.

Thereby, in the battery cell manufacturing method according to the present embodiment, the needle part insertion step S200 adjusts the thickness of at least one needle 210, and thus can further improve the wettability of an electrolyte solution for the cathode 111 and/or the anode 113 of the electrode assembly 110 without interfering with wetting of an electrolyte solution for the cathode 111 and/or the anode 113.

In addition, as shown in FIG. 3, at least one needle 210 may be arranged in a diagonal direction with respect to the thickness direction of the electrode assembly 110. However, the arrangement direction of the needle 210 is not limited thereto, and may be arranged in the same direction as the thickness direction of the electrode assembly 110.

Thereby, in the battery cell manufacturing method according to the present embodiment, the needle part insertion step S200 can insert at least one needle 210 into multiple positions inside the electrode assembly 100, thereby further improving the wettability of the electrode assembly 110 for the cathode 111 and/or the anode 113, and making the wettability of the electrolyte solution according to the position of the electrode assembly 110 more uniform.

In particular, as shown in FIG. 3, when at least one needle 210 is arranged in a diagonal direction with respect to the thickness direction of the electrode assembly 110, the needles 210 may be arranged at different positions with respect to the thickness direction of the electrode assembly 110, thereby making the wettability of the electrolyte according to the position of the electrode assembly 110 more uniform.

As one example, at least one needle 210 may have a bar or stick structure having a circular or square cross-section, or may have a porous structure. However, the shape of the needle 210 is not limited thereto, and the shape of the needle 210 may be a shape that does not interfere with wetting of an electrolyte solution for the cathode 111 and/or the anode 113 of the electrode assembly 110.

As one example, at least one needle 210 may be made of a non-metallic material. As another example, at least one needle 210 may be made from chemically resistant, acid-resistant, and alkali-resistant materials. However, the material of the needle 210 is not limited thereto, and the material of the needle 210 may be a material that does not react with an electrolyte solution and does not interfere with wetting of an electrolyte solution for the cathode 111 and/or the anode 113 of the electrode assembly 110.

Further, as shown in FIGS. 3 and 4, the needle part 200 may further include a connection part 250 extending along the thickness direction of the electrode assembly 110. In the needle part 200, one end of at least one needle 210 may be fixed to the connection part 250. As one example, one end of at least one needle 210 and the connection part 250 may be fixed to each other by a joining method such as welding, bonding, etc. As another example, one end of at least one needle 210 and the connecting part 250 may be of an integrated structure in which they are fixed to each other.

Thereby, in the battery cell manufacturing method according to the present embodiment, the needle part 200 inserted into the electrode assembly 110 in the needle insertion step S200 has a structure in which at least one end of the needle 210 is fixed to the connection part 250, which can assist in ensuring that at least one needle 210 is fixed to a predetermined position. In addition, there is an advantage in that at least one needle 210 included in the needle part 200 can be collectively removed in the subsequent needle part removal step S700.

Further, the connection part 250 may be located between the electrode assembly 110 and the sealing part 120s. As one example, if the space inside the receiving part 123 is sufficient, the connection part 250 may be located inside the receiving part 123 together with the electrode assembly 110. Unlike the same, if the space inside the receiving part 123 is not sufficient, the connection part 250 may be located outside the receiving part 123.

Thereby, in the needle insertion step S200 of the battery cell manufacturing method according to the present embodiment, the connection part 250 included in the needle part 200 is located between the electrode assembly 110 and the sealing part 120s, so that the needle part 200 can be easily inserted into the battery cell 100, and the needle part 200 can be easily removed from the battery cell 100.

However, the structure of the needle part 200 is not limited thereto and, unlike FIG. 3, a structure in which the connection part 250 is omitted from the needle part 200 may also be included in the present embodiment. In addition, in the case of a structure in which the connection part 250 is omitted from the needle part 200, at least one needle 210 may be removed respectively in the above-mentioned needle part removal step S700.

Referring to FIG. 1, in the electrolyte injection and sealing step S300, the electrolyte solution injected into the battery cell 100 means an electrolyte in liquid state, in which ions can be transferred between the cathode and the anode, and through the ion exchange between the cathode and the anode, the battery cell 100 can be charged and discharged. As one example, the electrolyte solution may include an organic liquid electrolyte, an inorganic liquid electrolyte, a solid polymer electrolyte, a gel-type polymer electrolyte, a solid inorganic electrolyte, a molten inorganic electrolyte, etc., but is not limited thereto.

Referring to FIGS. 1 and 2, in the electrolyte injection and sealing step S300, the battery cell 100 may be configured such that in a state where the needle part 200 is inserted into the electrode assembly 110, the electrolyte solution can be sufficiently injected into the battery case 120, and then the unsealed one side surface of the battery case 120 can be thermally fused to form a sealing part 120s.

Thereby, in the battery cell manufacturing method according to the present embodiment, the electrolyte injection and sealing step S300 sufficiently injects an electrolyte solution into the battery cell 100 through the unsealed one side surface of the battery cell 100, and then, the sealing part 120s is formed on the unsealed one side surface of the battery cell 100 to hermetically seal the internal space of the battery cell 100.

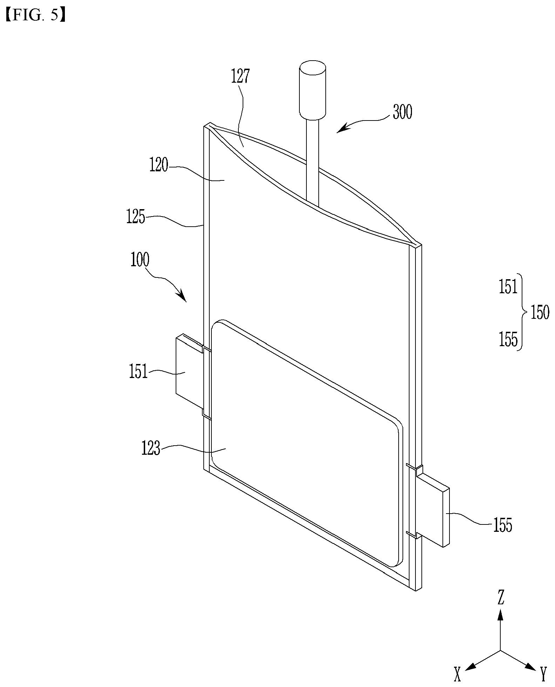

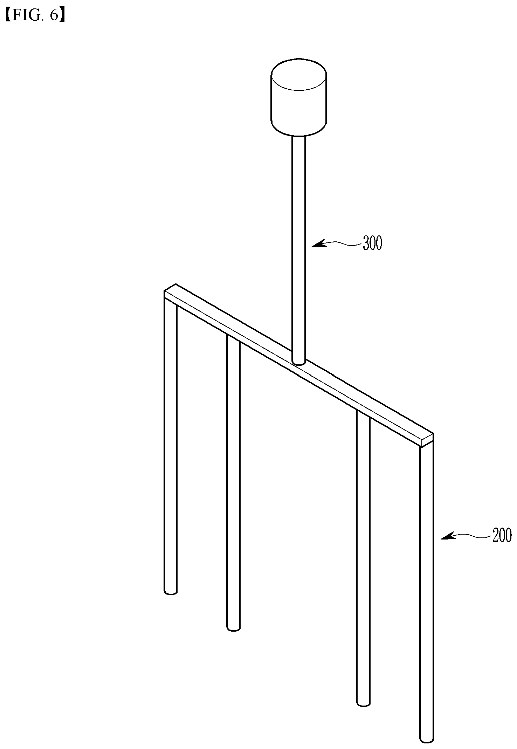

FIG. 5 is a perspective view showing a battery cell in the degassing and needle part removal steps of FIG. 1. FIG. 6 is a perspective view showing a needle removal part and a needle part inserted into an opening part of the battery cell of FIG. 5.

After the electrolyte injection and sealing step S300, the method may further comprise an activation step of activating the battery cell, and a degassing and needle part removal step S700 of removing the needle part 200.

Referring to FIG. 1, the activation step may include a pre-aging step S400 of storing the battery cell 100 at room temperature, a formation step S500 of charging and discharging the battery cell 100 at least once, and an aging step S600 of storing the battery cell 100 at high temperature.

Here, the battery cell 100 manufactured in the battery cell manufacturing method according to the present embodiment is subjected to the activation step in a state where the needle part 200 is inserted into the electrode assembly 110, whereby the gas generated inside the battery cell 100 in the activation step can be discharged more effectively to the outside of the electrode assembly 110, and lithium plating and capacity reduction that may occur by such air or gas can be prevented more effectively.

Referring to FIGS. 1, 2 and 5, in the degassing and needle part removal step S700, the sealing part 120s of the battery case 120 and the electrode assembly 110 are cut, so that an opening part 127 can be formed on one side surface of the battery case 120. More specifically, the battery cell 100 is cut along the first line L1 located between the sealing part 120s of the battery case 120 and the electrode assembly 110 as shown in FIG. 2, so that an opening part 127 can be formed on one side surface of the battery cell 100 as shown in FIG. 5.

Thereby, in the battery cell manufacturing method according to the present embodiment, the degassing and needle part removal step S700 can discharge air or gas generated inside the battery cell 100 to the outside through the opening part 127 formed on one side surface of the battery cell 100.

Referring to FIGS. 5 and 6, in the degassing and needle removal step S700, the needle removal part 300 may be inserted into the opening part 127 to remove the needle part 200 from the electrode assembly 110. As one example, as shown in FIG. 6, the needle removal part 300 is in contact with the needle part 200, and as the needle removal part 300 moves toward the opening part 127, the needle part 200 also moves therewith, so that the needle part 200 can be removed from the electrode assembly 110.

Thereby, in the battery cell manufacturing method according to the present embodiment, the degassing and needle part removal step S700 can relatively easily remove the needle part 200 from the electrode assembly 110 through the needle removal part 300.

Referring to FIGS. 1 and 2, the battery cell manufacturing method according to the present embodiment may further include a pressurized rolling step S800 of pressing and rolling the outer surface of the battery cell 100 after the degassing and needle part removal step S700.

Thereby, in the battery cell manufacturing method according to the present embodiment, the pressurized rolling step S800 can discharge air or gas trapped inside the electrode assembly 100 that was not removed in the degassing and needle part removal step S700 to the outside through the opening part 127.

Referring to FIGS. 1 and 2, the battery cell manufacturing method according to the present embodiment may include a resealing step S900 of resealing the portion cut between the sealing part 120s of the battery case 120 and the electrode assembly 110. More specifically, the battery cell 100 may be heat-sealed along the second line L2 located adjacent to the receiving part 123 of the battery case 120 as shown in FIG. 2 to seal one side of the battery case 120.

Thereby, in the battery cell manufacturing method according to the present embodiment, the resealing step S900 reseals one side of the battery cell 100 in a state where air or gas inside the battery cell 100 is sufficiently removed, thereby hermetically sealing the internal space of the battery cell 100.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Symbols]

100: battery cell
110: electrode assembly
111: cathode
113: anode
115: separator
120: battery case
120s: sealing part
123: receiving part
125: outer peripheral part
127: opening part
150: electrode lead
200: needle part
210: needle
250: connection part
300: needle removal part

## Claims

1. A battery cell manufacturing method, comprising:
a battery cell assembly step of mounting an electrode assembly including a cathode, an anode, and a separator interposed between the cathode and the anode into a receiving part of a battery case;
a needle part insertion step of inserting a needle part into the inside of the electrode assembly; and
an electrolyte injection and sealing step of injecting an electrolyte solution into the inside of the battery case in a state where the needle part is inserted into the electrode assembly, and then sealing the battery case.

2. The battery cell manufacturing method according to claim 1, wherein:
in the needle part insertion step,
the needle part is inserted between the separator and the cathode which are located adjacent to each other, or is inserted between the separator and the anode which are located adjacent to each other.

3. The battery cell manufacturing method according to claim 1, wherein:
in the needle part insertion step,
the needle part is inserted between the separator and the cathode which are located adjacent to each other, and is inserted between the separator and the anode which are located adjacent to each other.

4. The battery cell manufacturing method according to claim 1, wherein:
the needle part is inserted into a central part of the electrode assembly.

5. The battery cell manufacturing method according to claim 1, wherein:
the needle part includes at least one needle that extends along the width direction of the electrode assembly.

6. The battery cell manufacturing method according to claim 5, wherein:
the needle part has a thickness of 0.2 mm or more and 1 mm or less.

7. The battery cell manufacturing method according to claim 5, wherein:
the at least one needle is arranged in a diagonal direction based on a thickness direction of the electrode assembly.

8. The battery cell manufacturing method according to claim 5, wherein:
the needle part further includes a connection part that extends along the thickness direction of the electrode assembly, and
one end of the at least one needle is fixed to the connection part.

9. The battery cell manufacturing method according to claim 8, wherein:
the connection part is located between the electrode assembly and the sealing part.

10. The battery cell manufacturing method according to claim 1, wherein:
after the electrolyte injection and sealing step, the method further comprises,
an activation step of activating the battery cell, and
a degassing and needle part removal step of removing gas generated inside the battery cell to remove the needle part.

11. The battery cell manufacturing method according to claim 10, wherein:
in the degassing and needle part removal step, the sealing part of the battery case and the electrode assembly are cut so that an opening part may be formed on one side surface of the battery case.

12. The battery cell manufacturing method according to claim 11, wherein:
in the degassing and needle part removal step, a needle removal part is inserted into the opening part to remove the needle part from the electrode assembly.

13. The battery cell manufacturing method according to claim 10, wherein:
after the degassing and needle part removal step, the method further comprises,
a pressurized rolling step of pressing and rolling the outer surface of the battery cell, and
a resealing step of resealing the portion cut between the sealing part of the battery case and the electrode assembly.

14. The battery cell manufacturing method according to claim 10, wherein:
the activation step comprises:
a pre-aging step of storing the battery cell at room temperature,
a formation step of charging and discharging the battery cell at least once, and
an aging step of storing the battery cell at high temperature.
